# EUROPEAN PATENT APPLICATION

(11) **EP 1 637 483 A1**
(43) Date of publication of application: **22.03.2006**
(21) Application number: 05020171.4
(22) Date of filing: 15.09.2005
(51) Int. Cl.: B65G 47/24, A23N 15/08

(54) **Apparatus for orientating non-round objects**

(30) Priority: 15.09.2004 DK 200401400
(71) Applicant: Egatec A/S, 5250 Odense SV (DK)
(72) Inventor: Pedersen, Jorge Odd, 5260 Odense SV (DK)
(74) Representative: Tellefsen, Jens J.

(57) **Abstract**

Method for the orientation of non-round objects, where:
- an object is placed in accommodating means provided in a tray (4);
- which tray is moved from a first loading position into a superposed second position such that the means for accommodating the object is placed over a piston (3);
- the piston (3) is activated, whereby the object is engaged and lifted from the trays (4) and pushed through a flexible conic frustum shaped member (2), where the object is passed inside the frustum, and that the frustum tapers upwards;
- as the object has passed the frustum, means for transferring the object, for example in the shape of a suction cup, is provided such that the object is removed from the piston (3);
- as the object is engaged by the piston (3), the tray (4) may be withdrawn to the first loading position
- as the means (8) for transferring the object has engaged the object, the piston (3) may be retracted.

## Description

The present invention relates to an apparatus suitable for orientating non-round objects, in particular fruits, vegetables, bulbs, onions and the like, as well as a method for the orientation of non-round objects.

In certain industries where the products are not symmetrical or may have a varying cross-section and/or shape, it is often necessary to orientate such objects in a certain manner in order for further processing of the products to be able to be carried out.

This is true for products such as bulbs hereunder light bulbs, flower bulbs and different kinds of vegetables such as onions, beets and the like. In the art, several devices have been suggested which especially in the field of turning onions, bulbs and the like are quite cumbersome and/or labour intensive.

SU 1792632 describes a device for orientating onions for trimming where the onions are placed individually in a casing. Thereafter, the casing comprising the onion is moved in relation to spring-activated cams which will engage the onion in order to turn the onion in the casing. The cams are applied to both the top and the bottom of the onion in order to finalize the position of the onion such that subsequent trimming or further processing of the onion may be performed.

Another prior art device also within the field of treating onions is known from IT 1242964 describing an onion-peeling machine. The onions arrive on a conveyor and are placed on trays which are placed on a conveyor. Before the onions placed on the trays enter the onion-peeling device, it is necessary to orientate the onions such that the peeling device will know exactly where to cut and peel the onion in order to minimize waste and in order to achieve the optimum cutting and thereby peeling of the onion. For this purpose, a person is placed along the conveyor in order to orientate the onions manually such that the top of the onion will be turned upwards.

From US 4184423, still another device is known. This device is developed in order to cut round objects into wedge shape sections. The device comprises a generally rotatable round table provided with a member of equally spaced apertures. In each aperture, is arranged a deformable object support adapted to receive the object to be sectioned. A plunger arranged above the table will push the object through the deformable object support and thereby centre the object in relation to a cutting arrangement installed below the aperture. In this manner, substantially identical sections of the object are cut.

The device according to US 4184423 therefore does only centre the object to be cut. This is enough for a lot of uses. For other applications, however, it is necessary not only to centre the object to be treated but also to orientate the object, such that the following treatment will be carried out in the proper manner. US 4184423 is silent about this aspect and generally in the art, orientation of objects, and in particular non-round objects, is carried out by manual labour, as illustrated in IT 1242964.

The prior art devices all comprises disadvantages which severely limits the amount of items such as bulbs, pears, onions or the like which may be orientated and thereby made ready for further processing. Furthermore, the manual turning of onions is quite labour intensive and therefore quite costly as well as tiresome for the personnel involved which in turn may lead to permanent work related injuries.

It is, therefore, an object of the present invention to provide an apparatus as well as a method suitable for orientating non-round objects in order to prepare these for further processing.

The invention addresses this by providing an apparatus where said apparatus comprises at least one turning arrangement, where each turning arrangement comprises a substantially horizontally moveable tray with means for accommodating a non-round object, an extendable piston arranged below said tray for movement perpendicular to the tray, and an aperture in said tray superposed said piston for allowing the piston to pass the tray, and a resilient conic frustum member arranged coaxially with said piston above said tray, and means for transferring an object passed through the conic frustum member by the action of the piston for further treatment.

As there is no personnel involved in the orientation of non-round objects and furthermore that the apparatus may be supplied with more turning arrangements, the turning speed of the non-round objects is not limited by the personnel but is alone limited by the speed of the pistons, the product characteristics, as well as the means for transferring the object once the object has passed through the conic frustum member on to the further processing stations. Hereby, the overall productivity of the production line may be increased, and the bottleneck has been removed from the orientation station to somewhere else in the production process. The turning of non-round objects is desirable in relation to further processing such as peeling, cutting, packaging and the like. The orientation of the object is not to important as long as it is well defined and exactly the same for each object.

The provision of a conic frustum member through which the non-round objects are squeezed by means of a piston arranged below causes the non-round objects to be rotated due to the engagement with the conic frustum member in relation to the piston such that the most bulky part of the object will be facing upwards after said object has passed the conic frustum member.

As the objects are transferred by means of a tray movable in a horizontal direction, the objects to be orientated by the inventive apparatus according to the invention may arrive in the tray having any orientation. The tray is provided with means for accommodating a non-round object. For various objects, these means may vary, but for example for vegetables, a depression may be formed in the tray corresponding roughly to the size of the vegetable.

In a further advantageous embodiment, the conic frustum member comprises a substantially rigid ring member from which bristles extends to shape the conic frustum. The rigid ring member is provided in order to have a base in which to arrange the bristles. The bristles will, depending on the object to be processed in the apparatus be chosen from various materials and with various stiffnesses depending on the force necessary in order to turn the object. It is obvious that for example for turning light bulbs, bristles not affecting the surface of the glass or crushing the glass should be chosen whereas for turning beets which are several times heavier than light bulbs, stiffer bristles and rigid ring members having a larger diameter should be chosen. However, for the same type of objects whether it be for example light bulbs, flower bulbs or beets respectively, the same type of conic frustum members may be chosen for the same type of object. In this manner it is possible to provide substantially standardised conic frustum members for each type of object to be turned.

In a further advantageous embodiment, the conic frustum member comprises two layers of bristles between which two layers a resilient material layer, optionally in segments, is arranged. This kind of frustum member is especially advantageous in connection with relatively light objects such as for example onions, bulbs etc. The inventive construction of the conic frustum member having first a layer of bristles, then a layer of resilient material and then a second layer of bristles, provides a very reliable turning of the object. In this context it should be noted that although it has been found that a conic frustum member provides the best turning/orientating properties, tests with substantially flat frustum, i.e. the frustum is in one plane, has indicated that such an arrangement is suitable for certain objects. Also good results were achieved where the frustum did not have a circular configuration, such that polygonal and in particular four-, six- and eight- sided frustums proved to provide comparable results The first set of bristles will conform to the contours of the object and slightly, due to each bristle substantially having the same stiffness, attempt to force the object into a position where the force exerted by each bristle is at an equilibrium. Under the condition that the bristles are made from the same material thickness, same material characteristics etc., equilibrium will be achieved when the bristles are engaging a substantially circular member. This corresponds to a cross-section of the non-round object which is almost circular.

By forcing the non-round object further through the conic frustum member, the object will engage the solid resilient material layer which will exert a larger force onto the object. Hereby, a larger part of the exerted force will be exerted on the side of the object which is extending the furthest from the circular cross-section and thereby the final turning of the object will be achieved. The final layer of bristles will substantially slide on the underside of the non-round object and finally carry the object on top of the conic frustum member in its optimally turned position where the most tapered end of the object will be turned downwards, and the most round (bulky) part of the object will be turned upwards. Hereafter the means for transferring the object may be activated in order to collect the object from the conic frustum member and transfer the object for further processing.

During the development of the apparatus a number of materials and shapes of the conic frustum member were tested. Among these were pure rubber resilient layers, bristles where the free ends of the bristles, i.e. the ends not fastened in the ring member, were welded together and bristle materials such as polypropylene (PP), polyethylene (PE), polyvinylchloride (PVC) and polyamide (PA). For the embodiments of the apparatus where onions, bulbs of onion size and similar objects were turned it was found that bristles made from PA (nylon) and a resilient layer made from nitril-rubber such as for example Linapren nl (foodgrade) provided the best results. The ring member in which the bristles and the resilient layer are arranged may advantageously be manufactured from POM.

In a still further advantageous embodiment of the invention, the resilient material has a friction coefficient substantially higher than the bristles. By providing a substantially higher coefficient of friction on the resilient material, a more determined engagement with the object as it passes through the conic frustum member may be achieved such that a more determined positioning of the object may be achieved. Also for objects having a rather smooth surface, such as for example light bulbs made from glass or onions where the outer layers have disappeared, it might be advantageous to provide the high friction coefficient in order to be able to engage the object to be turned.

In a still further advantageous embodiment, the means for transferring the objects, after said objects have passed the conic frustum member, comprises a ring member, which ring member may be brought into contact with the conic frustum member, and a gripping member for engaging/gripping the object. In order to further improve the positioning of the object, as it has passed the conic frustum member, the ring member of the means for transferring the objects, engages the bristles and forces the bristles slightly downwards such that they will slide down along the tapered end of the object. As the bristles are made from substantially identical materials concerning length, diameter and material, the force exerted by the bristles on the object will be substantially constant and the object which has passed the conic frustum member will be forced into a more determined position, i.e. a well defined up-down position with respect to the tapered end and the rounded (bulky) end.

In a further advantageous embodiment, the apparatus is provided with four or more turning arrangements which are arranged in a row and at least two rows of turning arrangements are provided, where each tray comprises means for accommodating a number of objects corresponding to the number of rows of turning arrangements provided in the apparatus.

As one of the problems with the prior art devices is a capacity problem, i.e. that the process may be quite labour intensive as illustrated in IT 1242964, the present invention has the advantageous feature that the apparatus may be expanded to any number of turning arrangements for example as suggested where four or more turning arrangements are arranged in a row and two rows are arranged in parallel such that the tray made for the embodiment where two rows are arranged in parallel has two means for accommodating for example the onions and if three rows are provided there will be three means for accommodating the objects in the trays. In this manner, it is possible to construct an apparatus having any desired capacity. Tests with the prototype have furthermore shown that the cycle time from a non-round object is received in the tray until it is collected by the means for transferring of objects is less than four seconds.

In a further advantageous embodiment, the one or more trays may be moved from a first position away from the one or more pistons, to a second position where the means for accommodating the object is superposed the piston. The movement of the trays and especially the concurrent movement of the trays at the same time as the pistons are extending and thereby pushing the object to be turned through the conic frustum, provides for relatively fast processing for the turning process. Furthermore, as the trays are moved out of the superposed position in relation to the pistons, the objects to be turned do not have to enter the apparatus and thereafter be placed in position in order to be turned but are placed in the trays outside the actual turning procedure whereby it becomes possible to improve the control of placement of the objects to be turned in the trays such that the pre-positioning is in a well-defined position outside the turning mechanisms.

In a still further advantageous embodiment, the trays have longitudinal slit arranged centrally in each tray, where the width of the slit at least corresponds to the cross section of the piston rod, and that the means for accommodating the objects is one or more depressions or apertures. By providing the slits such that the slits have a width which at least corresponds to the size of the pistons, it is possible to move the trays in a horizontal direction completely independent of the pistons in that the slit and thereby the entire tray will be able to move freely in relation to the pistons.

In a further advantageous embodiment, the pistons may where they engage the objects, be provided with means for suction and/or blowing of air. The suction may advantageously be provided for a very short period of time as the piston engages the object to be turned and elevates the object from the depression in the trays where after the suction should be cut off. During the transition of the object through the conic frustum member, blowing of air and thereby establishing an air cushion between the top of the piston and the object may advantageously reduce the friction such that easier turning of the object may be achieved during the passage of the conic frustum. As soon as the object has been turned, the air stream may advantageously be cut off such that the gripping means may be able to establish a firm suction or gripping in order to transfer the objects for further processing.

As already mentioned in the introduction, the invention also relates to a method for the orientation of non-round objects. The method is especially advantageous in that
- an object is placed in accommodating means provided in a tray;
- which tray is moved from a first loading position into a superposed second position such that the means for accommodating the object is placed over a piston;
- the piston is activated, whereby the object is engaged and lifted from the trays and pushed through a flexible conic frustum shaped member, where the object is passed inside the frustum, and that the frustum tapers upwards;
- as the object has passed the frustum, means for transferring the object, for example in the shape of a suction cup, is provided such that the object is removed from the piston;
- as the object is engaged by the piston, the tray may be withdrawn to the first loading position
- as the means for transferring the object has engaged the object, the piston may be retracted.

This method provides a very fast and very smooth process of receiving non-round objects in any arbitrary orientation, handling them through the method steps mentioned above and delivering the object having a well-defined orientation such that further processing may be carried out in relation to a well-defined positioning of the objects. The further processing may be anything from cutting, slicing or peeling vegetables, fruits, berries or the like and/or packaging of items for examples vegetables, fruits, berries, production items such as light bulbs, flower bulbs etc. and etc. As the method as well as the apparatus only needs to take into account the size of the object to be turned, it may be used for turning a wide variety of items simply by changing/adapting the conic frustum member to that particular item.

Although the method described above refers to one object, one piston, one tray having one accommodating means, it is understood that the method may be expanded to any number of trays, pistons etc. as explained above.

Therefore also in a further advantageous embodiment of the invention, the invention is directed to a resilient conic frustum member for use in an apparatus as described above which may be used to carry out the method as described above where the frustum comprises a substantially rigid cylindrical base member, where said base member is provided with means for attaching at least one set of resilient members along an inner periphery, where said resilient members extends towards the centre of the cylindrical member, and out of the cylinders' plane, thereby forming a conic frustum.

During the development of the apparatus, it has surprisingly been found that a resilient conic frustum member as described above will engage and turn non-round objects very reliably. In a further advantageous embodiment of the resilient frustum member, the frustum comprises three layers, fastened in one end to the rigid member and free at the opposite end where an upper and lower layer is constituted by flexible bristles, and interposed between the upper and lower layers, a resilient material layer is arranged where said resilient material layer has a coefficient of friction higher than the upper and lower layer. With this construction, an even better and more reliable turning of non-round objects is achieved, and also the versatility of non-round objects which may be turned during the method discussed above and by using an apparatus as described above has been further improved.
Fig. 1 illustrates an isometric view of an apparatus with certain parts removed.
Fig. 2 illustrates a cross-section through an embodiment of the apparatus.
Fig. 3 illustrates a cross-section through a conic frustum member.
Fig. 4 illustrates an isometric view of a conic frustum member, partly disassembled.
Fig. 5 illustrates the working cycle of the apparatus.

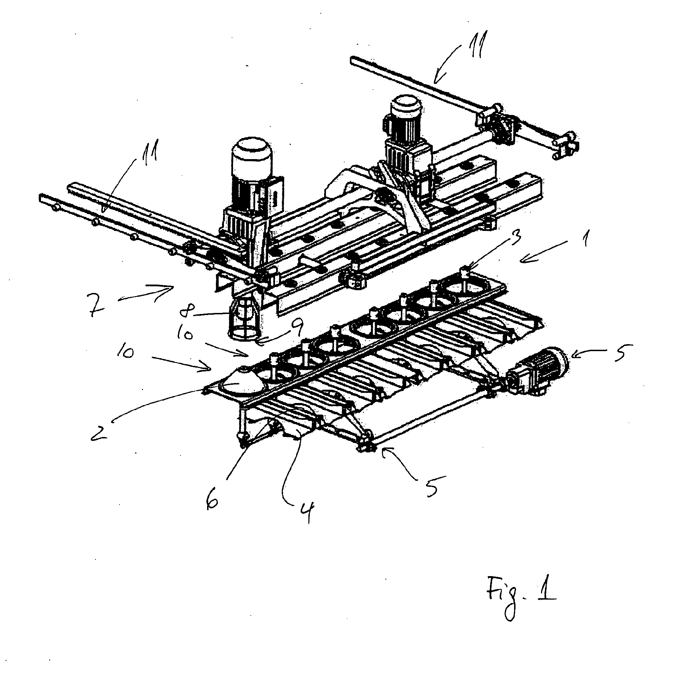

The apparatus illustrated in fig. 1 is for illustrative purposes only shown as a single row 1 of turning arrangements 10. In the row 1 of turning arrangements 10, eight turning arrangements are arranged in a row. It shall be understood that more rows and more turning arrangements in each row may be arranged depending on the situation.

The turning arrangement 10 comprises a conic frustum member 2 which for illustrative purposes has been removed from a number of the turning arrangements 10 in the row 1. Superposed the conic frustum member is a piston 3 which is extendable and controllable in a vertical direction. Below the conic frustum members 2, a number of trays 4 are provided which trays in this embodiment by means of mechanical means 5 may be moved in a horizontal direction from a first position where the trays are not overlapping the pistons into a position where at least a part of the tray is overlapping the piston 3. In the trays 4, means for accommodating the non-round objects are provided. In this illustrative embodiment, the apparatus is suitable for turning onions such that the means for accommodating the non-round objects are especially designed for accommodating onions. The accommodation means 6 may advantageously in the case where the apparatus is designed for treating onions be in the shape of depressions or deformations in the trays and also apertures at the bottom of the depressions such that firstly the pistons 3 may move freely through the tray but also such that debris from the onions may pass the tray unhindered.

Superposed above the conic frustum member are the means for transferring the objects, for example an onion, passed through the conic frustum member 2. In this embodiment, the means 7 comprises a suction cup 8 around which a ring member 9 is arranged. The means for transferring 7 furthermore comprises rail guides 11 along which the suction means 8 and the ring member may travel in order to move the non-round object orientated by means of the piston 3 in the conic frustum member 2 to further processing which is not illustrated.

Alternatively, the means for transferring objects may comprise gripping means which physically engage the object or which are inserted into the object.

It should be understood that the seven exposed pistons 3 are to be covered by conic frustum members 2, but these are left out for illustrative purposes.

During operation of the apparatus, the pistons will transfer the non-round object for example an onion from the trays 4 through the conic frustum member 2 where after the means for transferring 7 of the non-round objects will engage the object. The engagement comprises moving the suction cup and the ring member 9 in a vertical direction towards the conic frustum member such that the ring member will pass the non-round object and squeeze the conic frustum member and at the same time, the suction cup 8 will engage the non-round object for example the onion. By the engagement between the ring member 9 and the conic frustum member 2, the conic frustum member will be slightly deformed, but the deformation will cause the non-round object, especially onions, to be more precisely orientated such that an even better result is achieved than what is to be achieved without the ring member 9.

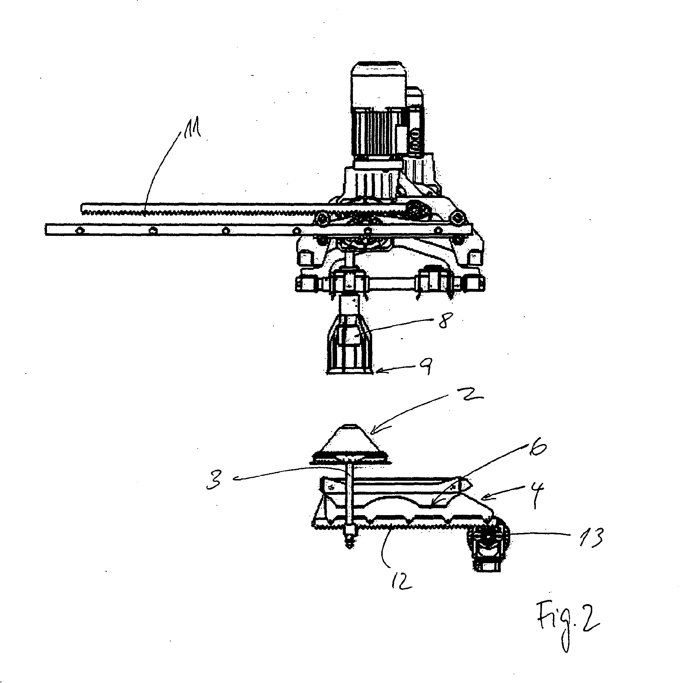

Turning to fig. 2, a cross-section through the apparatus in fig. 1 is illustrated. In this illustration, it may be seen that the tray 4 is moved by means of a tooth rack 12 provided on the lower side of the tray which tooth rack 12 engages gear wheels 13 which may be driven by an electrical motor, as illustrated in fig. 1.

Alternative means, such as telescopes, actuators and the like, for moving the trays back and forth may be utilised without departing from the scope of the invention.

In fig. 3, a cross-section through one embodiment of the conic frustum member is illustrated. The conic frustum member 2 may be made from a flexible resilient material, but in an advantageous embodiment, as illustrated in fig. 3, the conic frustum member comprises a rigid ring member 14, in which the resilient means are arranged. In this embodiment, the resilient means comprises three layers which together form the conic frustum. The ring member may as mentioned above have other shapes than circular, such as four-, six- eight-sided or any other shape.

A first layer 15 comprises substantially identical bristles where the bristles are made from a polymer-based material having a rigidity and flexibility chosen according to the circumstances. An upper bristle layer 16 may also be provided of the same kind of bristle materials as the lower layer 15.

Interposed between the two bristle layers 15,16 is a resilient layer for example made from rubber or a polymer material having a relatively higher coefficient of friction than the bristle materials 15,16 such that the intermediate layer 17 will exert a better grip on the non-round objects which are to pass along the central axis 18 of the conic frustum member 2.

The main wear parts of an apparatus as illustrated in fig. 1 and 2, are the bristles and the intermediate layer 17. Due to the constant engagement with non-round and often abrasive objects such as onions, beets and the like, wear on the conic frustum occurs. Therefore, the conic frustum members may advantageously be produced as separate units which are easy to replace in the apparatus as illustrated in fig. 1. Furthermore, depending on the type of non-round objects which are to be orientated in the apparatus according to the invention, the shape of the conic frustum may be designed such that engagement by the two layers of bristles 15,16 and the intermediate resilient layer 17 having a higher coefficient of friction 17 is selected depending on the objects to be orientated. For example, the aperture in the top of the conic frustum may be larger when turning larger objects such as beets and the like whereas for other purposes, the aperture and the thickness of the bristles 15,16 may be chosen smaller such that they will not effect or damage the objects to be turned.

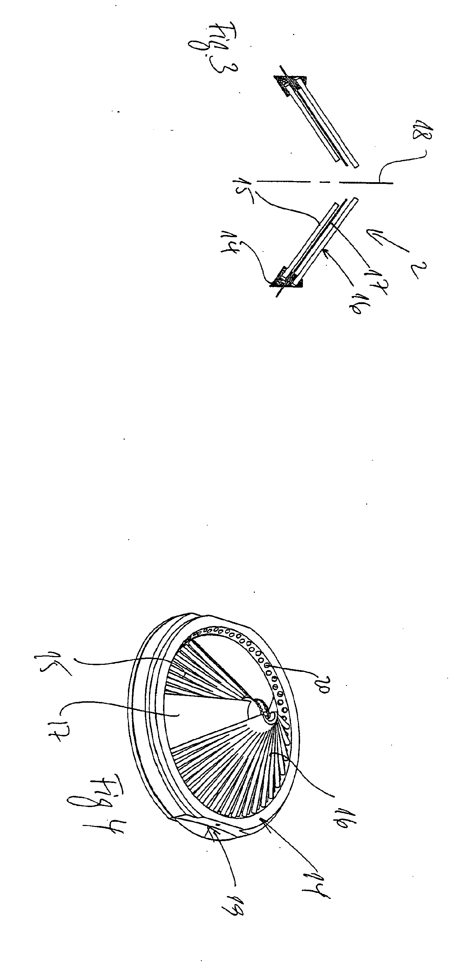

In fig. 4, an asymmetric view of a resilient conic frustum member is illustrated. The member is made as a unit which by means of holding arrangements 19 formed in the rigid member 14 may easily be placed and replaced in the apparatus illustrated in fig. 1. A part of the bristles 15,16 and the intermediate resilient layer 17 have been removed in order to expose the inside of the rigid member 14. The bristles may advantageously be fastened in the rigid ring member 14 in apertures 20 in a known manner.

In fig. 5a through 5i, the process of turning non-round objects, in this case onions, is illustrated. For the sake of clarity, only the necessary elements of the apparatus have been illustrated.

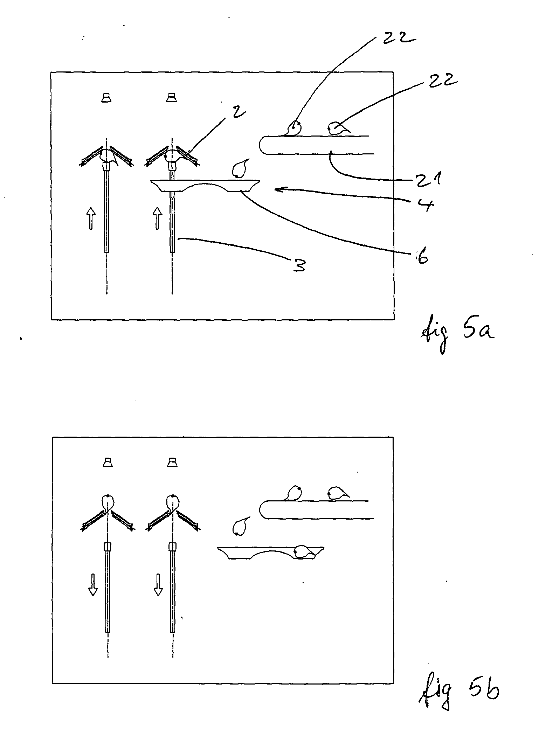

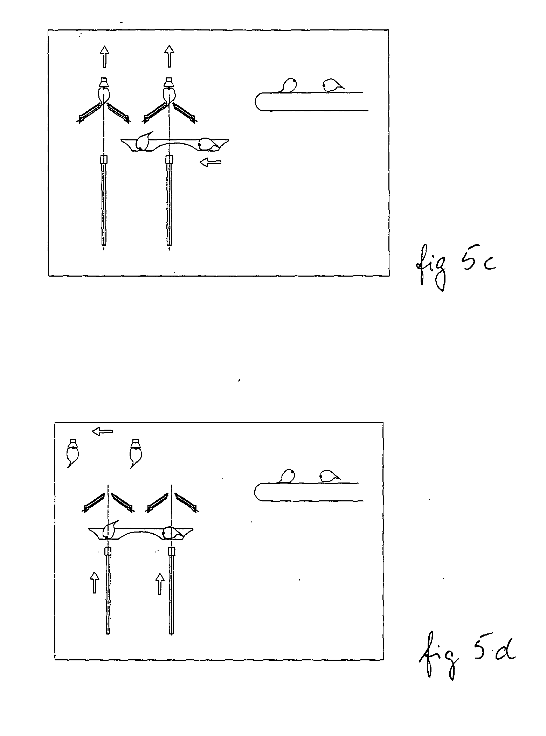

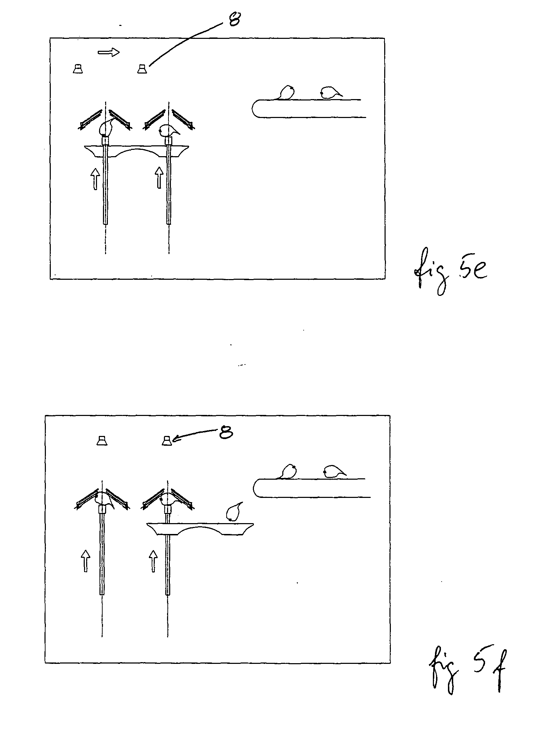

A conveyor 21 transports the non-round objects, hereafter onions 22, into proximity of the apparatus for orientating the objects. From the conveyor 21, the onions 22 are transferred to the trays 4 wherein accommodation means 6 are provided. As illustrated, the accommodation means are in the shape of depressions shaped in the bottom of the tray 4. In this particular embodiment the accommodation means 6 in the trays are filled such that the means 6 furthest away from the pistons are filled first, which in practice means that the trays are filled on their return journey. The pistons 3 are in this position extended and moving upwards, forcing onions through the frustum 2. In the embodiment illustrated in fig. 5, two parallel rows 1 of turning arrangements are provided. Consequently, a tray having two means 6 for accommodating the onions are likewise provided such that an onion may be superposed each piston.

As the rearmost accommodation means 6 is loaded with an onion, the tray 4 moves on to a position where an onion 22 may be received in the second accommodation means as illustrated in fig. 5b. At the same time the pistons has delivered the onions on top of the frustums 2, and are in the process of being withdrawn.

When the tray is completely filled with onions, as illustrated in fig 5c, the tray is moved into a position superposed both the pistons 3. Due to the design of the tray where in addition to the apertures provided at the bottom of the means for accommodating the onions, a slit is provided parallel to the direction of movement of the tray such that the pistons may move unhindered up and down without interfering with the horizontal movement of the trays. The pistons may engage, extend or retract unhindered in relation to the tray.

When the tray is in the position as illustrated in fig. 5c, the pistons are activated whereby the onions placed in the tray's aperture 6 are engaged. By extending the pistons 3, the onions 22 will be pushed towards the conic frustum member 2 whereby the bristles 15,16 and the resilient member 17 will engage the onions as illustrated in fig. 5e.

As soon as the pistons are extended such that the onions 22 are elevated from the tray as illustrated in fig. 5e, the tray may return to the loading position such that onions conveyed on the conveyor 21 may be placed in the appropriate depressions 6 in the tray 4. This may take place concurrently with the pistons extending such that the onions are forced through the conic frustum member where the onions engages and are turned by the bristles of the conic frustum member.

As soon as the onions have passed the conic frustum member, pistons 3 are withdrawn, and at the same time, means for transferring 8 the onions from the conic frustum member to further processing are brought into contact with the onions.

Also during the same movement, the tray 4 which in the meantime has been filled with new onions from the conveyor belt into the depressions 6 provided in the tray 4 is moved horizontally into position such that the pistons again may again engage the onions placed in the tray. During the movement of the tray 4 into a superposed position above the pistons 3, the onions already orientated are moved away from the conic frustum members as illustrated in fig. 5f. Hereafter the cycle repeats itself in that the illustrated relative position of the different means of the apparatus as illustrated in fig. 5f corresponds to the illustration as fig. 5a.

As already mentioned above, the cycle time from fig. 5a through fig. 5f has for a prototype of the apparatus been registered to approximately 4 seconds.

## Claims

1. Apparatus, suitable for orientating non-round objects, and in particular bulbs, berries, fruits, vegetables such as onions, beets and the like, where said apparatus comprises at least one turning arrangement, where each turning arrangement comprises a substantially horizontally moveable tray with means for accommodating a non-round object, an extendable piston arranged below said tray for movement perpendicular to the tray, and an aperture in said tray superposed said piston for allowing the piston to pass the tray, and a resilient conic frustum member arranged coaxially with said piston above said tray, and means for transferring an object passed through the conic frustum member by the action of the piston for further treatment.

2. Apparatus according to claim 1 **characterised in that** the conic frustum member comprises a substantially rigid ring member from which bristles extends to shape the conic frustum.

3. Apparatus according to claim 1 or 2 **characterised in that** the conic frustum member comprises two or more layers of bristles between which two or more layers a resilient material layer, optionally in segments is arranged.

4. Apparatus according to any preceding claim **characterised in that** the resilient material has a friction coefficient substantially higher than the bristles.

5. Apparatus according to claim 3 or 4 **characterised in that** the means for transferring the objects, after said objects has passed the conic frustum member, comprises a ring member, which ring member may be brought into contact with the conic frustum member, and a gripping member for engaging/gripping the object.

6. Apparatus according to any preceding claim **characterised in that** four or more turning arrangements are arranged in a row and at least two rows of turning arrangements are provided, where each tray comprises means for accommodating a number of objects corresponding to the number of rows of turning arrangements provided in the apparatus.

7. Apparatus according to any preceding claim **characterised in that** the one or more trays may be moved from a first position away from the one or more pistons, to a second position where the means for accommodating the object is superposed the piston.

8. Apparatus according to any preceding claim **characterised in that** the trays have a longitudinal slit arranged centrally in each tray, where the width of the slit at least corresponds to the cross section of the piston and that the means for accommodating the objects is one or more depressions or apertures.

9. Apparatus according to any preceding claim **characterised in that** the pistons may, where they engage the objects be provided with means for suction and/or blowing of air.

10. Method for the orientation of non-round objects, where:
- an object is placed in accommodating means provided in a tray;
- which tray is moved from a first loading position into a superposed second position such that the means for accommodating the object is placed over a piston;
- the piston is activated, whereby the object is engaged and lifted from the trays and pushed through a flexible conic frustum shaped member, where the object is passed inside the frustum, and that the frustum tapers upwards;
- as the object has passed the frustum, means for transferring the object, for example in the shape of a suction cup, is provided such that the object is removed from the piston;
- as the object is engaged by the piston, the tray may be withdrawn to the first loading position
- as the means for transferring the object has engaged the object, the piston may be retracted.

11. A resilient conic frustum member for use in an apparatus according to any of claims 1 to 9 and /or used in a method according to claim 10 **characterised in that** the frustum comprises a substantially rigid cylindrical base member, where said base member is provided with means for attaching at least one set of resilient members along an inner periphery, where said resilient members extends towards the centre of the cylindrical member, and out of the cylinders' plane, thereby forming a conic frustum.

12. A resilient conic frustum member according to claim 11 **characterised in that** the frustum comprises three layers, fastened in one end to the rigid member and free at the opposite end where an upper and lower layer is constituted by flexible bristles, and interposed between the upper and lower layers, a resilient material layer is arranged where said resilient material layer has a coefficient of friction higher than the upper and lower layer.
